# EUROPEAN PATENT APPLICATION

(11) **EP 1 286 518 A2**
(43) Date of publication of application: **26.02.2003**
(21) Application number: 02102097.9
(22) Date of filing: 05.08.2002
(51) Int. Cl.: H04L 29/06

(54) **System and Method for Real-Time Non-Participatory User Recognition and Content Provisioning**

(30) Priority: 03.08.2001 US 923232
(71) Applicant: Texas Instruments Incorporated, Dallas, Texas 75251 (US)
(72) Inventor: MILOVANOVIC, Rajko, 75093-4517, Plano (US); KILLIAN, Robert T., 75248, Dallas (US)
(74) Representative: Holt, Michael

(57) **Abstract**

In one aspect, the present invention provides a method of non-participatory user identification includes using sensor technology to collect data related to identifying characteristics of a user. The collection preferably requires no active identification measures by the user. The data can be extracted from the sensor technology 12 and matched to a template. This matching can, as an example, be performed using a matcher included in a recognition technology device 14. The user can then be identified based upon the template of data matched. Typically, the recognition technology device 14 will recognize when a new but known fingerprint is operating the user interface. The corresponding user profile may then be used to provide personalized content to the new user.

## Description

### Technical Field of the Invention

This invention relates to real-time user identification systems and more particularly to a system and method for non-participatory real-time user recognition and content provisioning.

### Background of the Invention

In the past cable, satellite, terrestrial system, and network service providers have identified customers and their preferences through the use of broad characterization and categorization techniques such as census statistics, polling, and surveys. These and other techniques used today, however, lump large numbers of households, each of which may be comprised of a group of TV viewing customer together in broadly defined geographic areas.

The proliferation of two-way interactive television, however, has resulted in a need to address each individual member of a household as a separate TV viewing customer. By identifying individual members in a household, service providers can target each individual viewer with personalized content and personalized interactive and/or value added services based on pure demographic data (i.e., gender, marital status, age, etc.) and/or personalized profiles. The personalized content may range from simple viewer preferences for program listings to personalized advertisements in which advertising content is customized with the individual viewer in mind.

Today's devices such as TV's and TV settop boxes cannot identify members in the TV viewing audience and thus cannot provide the viewer identification information needed by service providers to deliver personalized content.

Furthermore, there is a need to provide personalized content through technology that is non-participatory (i.e., requiring little or no active involvement by the individual(s) being identified). While an individual may happily key in a user id and password into a personal computer (PC) or individual applications on the PC, it is quite unlikely that an individual will want to be inconvenienced with keying in such information when ready to watch a program on television. What is needed is a system and method for identifying an individual viewer without the need for active user input for identification.

### Summary of the Invention

These and other problems are generally solved or circumvented, and technical advantages are generally achieved, by the present invention that is a system and method for real-time non-participatory user recognition and content provisioning.

In one aspect, the present invention provides a method of non-participatory user identification includes using sensor technology to collect data related to identifying characteristics of a user. The collection preferably requires no active identification measures by the user. The data can be extracted from the sensor technology and matched to a template. This matching can, as an example, be performed using a matcher included in a recognition technology device 14. The user can then be identified based upon the template of data matched. Typically, the recognition technology device 14 will recognize when a new but known user is operating the user interface. The corresponding user profile may then be used to provide personalized content to the new user.

An advantage of a preferred embodiment of the present invention is that each member of a household can be identified for personalized content provisioning.

Another advantage of a preferred embodiment of the present invention is that the user is not required to actively enter information or actively participate in his/her identification.

Yet another advantage of a preferred embodiment of the present invention is that the user can, if the user desires, input preferences into a personal profile for use in assembling particular content.

The foregoing has outlined rather broadly the features and technical advantages of the present invention in order that the detailed description of the invention that follows may be better understood. Additional features and advantages of the invention will be described hereinafter, which form the subject of the claims of the invention. It should be appreciated by those skilled in the art that the concepts and specific embodiments disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

### Brief Description of the Drawings

The above features of the present invention will be more clearly understood from consideration of the following descriptions in connection with accompanying drawings in which:
Figure 1 illustrates a preferred embodiment system for user recognition and content provisioning of the present invention;
Figure 2 illustrates preferred embodiments of data acquisition devices of the present invention;
Figure 3 illustrates a preferred implementation of one embodiment of the present invention;
Figure 4 illustrates a preferred embodiment remote control device of the present invention;
Figure 5 illustrates preferred embodiment recognition technology device of the present invention; and
Figure 6 illustrates a preferred embodiment content provider system of the present invention.

Corresponding numerals and symbols in the different figures refer to corresponding parts unless otherwise indicated.

### Detailed Description of Preferred Embodiments

The making and using of the presently preferred embodiment is discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

In a first aspect, the present invention provides a method and apparatus to determine the identity of a viewer (e.g., a television viewer). Accordingly, a non-obtrusive detector, or data acquisition device, is situated to detect the identity of a user without the user actively participating in the identification process. As a first example, a fingerprint detector can be incorporated into a remote control. In other examples, a camera can be mounted on the television or a microphone embedded in the remote. Other techniques could also be used.

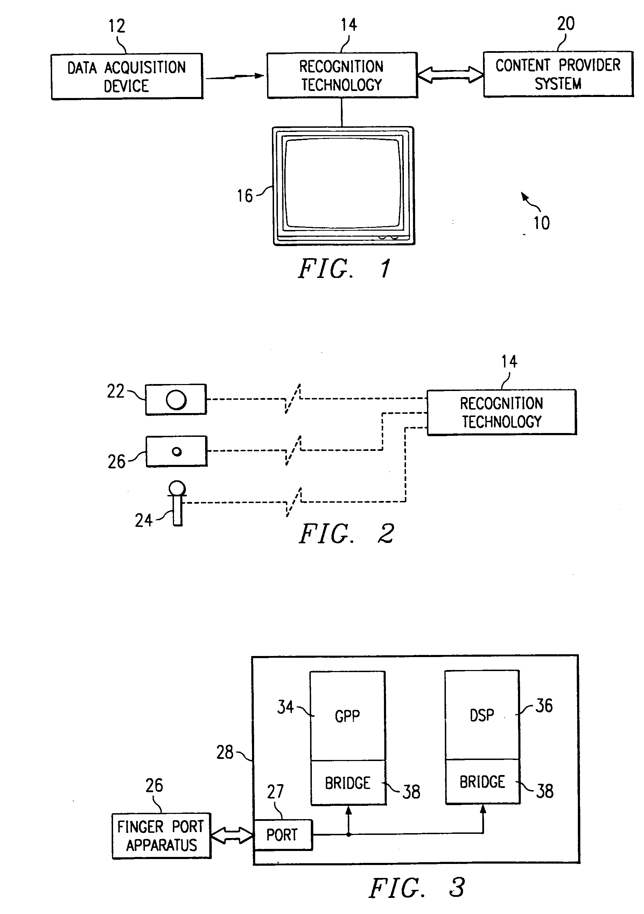

Figure 1 illustrates a system for user recognition and content provisioning of a preferred embodiment of the present invention. In this illustration, the system 10 includes a data acquisition device 12, recognition technology device 14, an apparatus for content provisioning 16, and a content provider system 20.

The data acquisition device 12 is utilized to acquire data on identifying characteristics of the user(s). For example, device 12 can acquire information related to the user(s) voice, face or fingerprint. Other types of data could also be acquired using, as examples retinal scan or DNA matching technology. In general, any information that helps a service provider learn more about the user could be acquired. The type of data acquired could range from information that can indicate the identity of the user to information that provides information about the user (e.g., young or old, male or female).

The data acquisition device 12 is coupled to the recognition technology device 14, which will accept the data from the data acquisition device 12 and process the data for recognition of the user. In the illustrated example, device 12 is coupled wirelessly via a radio frequency, infrared, or other wireless data transmission technology. This type of coupling can be useful, for example, when the data acquisition device 12 is embedded in a remote control or is otherwise physically spaced from the device 14. In other examples, device 12 is coupled to the device 14 through a cable or other wire. This type of coupling can be useful when the data acquisition device 12 is physically close to the recognition device 14, e.g., a camera embedded in a television or settop box.

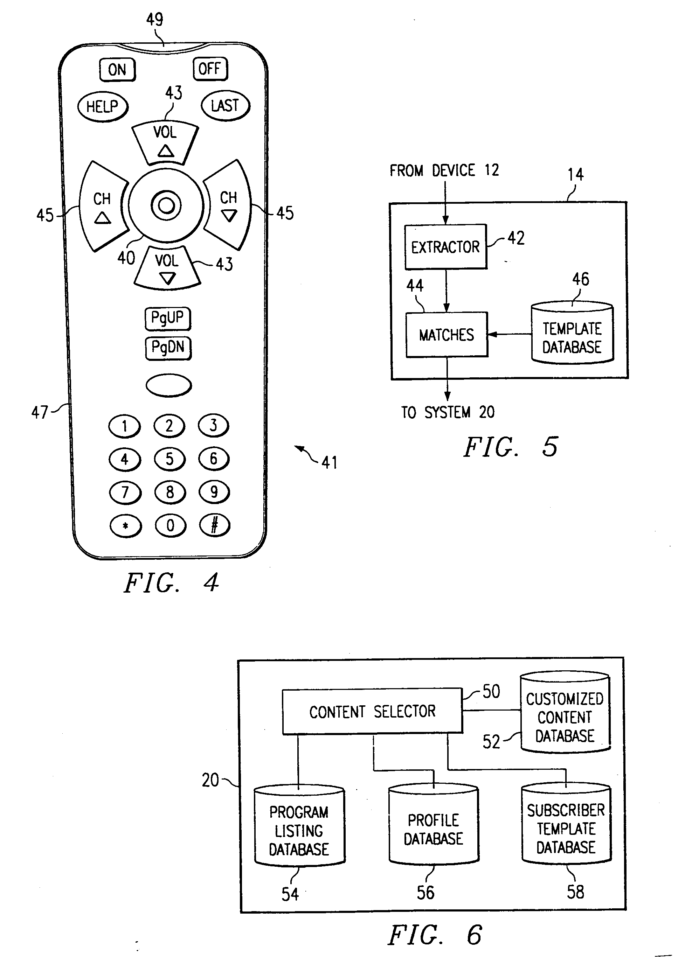

Recognition technology device 14 can be used to extract user information from the data acquired by acquisition device 12. For example, acquisition device 12 may generate a data image suitable for recognition processing. Recognition technology device 14 can then use the data image to generate an identification template and compare this template with known templates and determine identification information. More discussion of recognition device 14 is provided below with respect to Figure 5.

The recognition technology device 14 is in turn coupled to the content provider system's 20 content selector 50 (see Figure 6), which retrieves user preferences (if available) from the user profile database (52 in Figure 6) and selects customized content based on the user's information from the content database. The content provider system 20 sends/transmits the customized content to the apparatus for content provisioning 16, which displays the customized content.

The apparatus 16 may be a television receiver that displays the content from the content provider system 20. Alternatively, the apparatus 16 may be any other suitable device such with visual and/or audio content presentation capabilities such as a cell phone, PDA (Personal Data Assistant), computer (e.g., laptop or desktop), and others. For example, a radio (or website) presenting customized content in an audio-only format could utilize aspects of the present invention.

In other embodiments, the apparatus 16 can be a settop box that is designed to be connected to a television. For example, a digital cable or digital satellite signal may be provided to a settop box, which converts the digital signal into an analog television signal that an analog television can display to a user. In this manner, the settop box can be considered an apparatus capable of presenting customized content to the user.

In a typical embodiment, the content provider system 20 is located remotely from the presentation apparatus 16. For example, the content provider system may be owned by a cable television or satellite television provider. In this case, the hardware and software components within the box labeled 20 would likely be located on premises owned by the provider.

The content provider system 20 stores or maintains user profiles containing data and information on user preferences and demographic characteristics such as age, gender, marital status, etc. in a storage means (labeled 56 in Figure 6). The content provider system also includes a content database (labeled 52 in Figure 6), which contains the content or information to be provided to the user and which can be customized according to the data and information in the stored user profiles.

Figure 2 illustrates various data acquisition devices 12 according to various preferred embodiments of the present invention. Because the data upon which recognition will be based can be in various formats, for example voice, visual, or fingerprint, the data acquisition device 12 can take the form of several devices, such as, for example only, a video camera 22, a microphone 24, or a fingerprint scanning apparatus 26. In a typical embodiment, only one of these devices 22, 24 or 26 would be included, although the present invention does not preclude the use of more than one data acquisition device.

The video camera 22 can be any commercially available camera such as a WebCam, which will zoom onto an individual user's face and take a snap shot of the user's face. The image data can then be sent to the recognition technology device device14 for facial recognition. If voice recognition is used, a microphone 24 can be used. The user may speak into the microphone 24 and the voice data sent to the recognition technology device 14 for voice recognition. Similarly, fingerprint recognition technology can be used for fingerprint identification of the user.

Figure 3 provides a very specific example of one implementation of a finger print recognition system. It is recognized that other systems may also be used.

As shown in the embodiment of Figure 3, the finger print apparatus 26 may be used in conjunction with a Multimedia Application Platform (such as OMAP platform by Texas Instruments) 28. Platform 28 includes a fingerprint identification (FP) grid. The platform 28 typically includes a general-purpose processor (GPP) 34 and a digital signal processor (DSP) 36 coupled together by bridge circuitry 38. The GPP 34 handles general operations such as system operations for a user interface or graphical user interface (GUI) (not shown). The DSP 36, on the other hand, handles the specialized operations needed for recognition of the user. Typically, the finger print apparatus 26 is coupled to the platform 28 through a parallel port 27, but may be coupled by other means.

In one embodiment of the present invention, the data acquisition device 12 is a stand-alone device, e.g. a video camera. In another embodiment of the present invention, the data acquisition device 12 (e.g., fingerprint sensor, microphone) is integrated into another operating device such as a remote control used for operating the apparatus for content provisioning 16. In either embodiment, the device 12 can provide non-participatory user identification. For example, the integration of the data acquisition device 12 does not require the user to obtain or utilize another device or actively input information for identification.

For example, in one embodiment that utilizes finger print identification, the finger print apparatus 26 is incorporated into a remote control device. The finger print apparatus 26 can be positioned such that a finger is positioned in the "able to identify" location when holding the remote control device in one of several typical manners.

One preferred embodiment remote control device 41 of the present invention, which does not require viewer pro-activity or participation for identification purposes, is shown in Figure 4. The remote control device 41 includes a housing 47 which stores electronic circuitry (not shown). The remote also includes a signal transmitter 49 that can be used to control a television or any other suitable content presentation device. A number of control keys are disposed on an outer surface of housing 47.

The illustrated embodiment has an arrangement in which the volume up/down keys 43 and channel up/down keys 45 are positioned in a thumb operated cross 40, with the finger print apparatus 26 located in the middle of the cross 40. This arrangement allows non-participatory identification of the user by analyzing the user's thumbprint when the user changes channels or the volume. It should be appreciated by those skilled in the art, that the finger print apparatus 26 could be used in various different applications by incorporating it as a part of any key in any physical topology.

In another preferred embodiment, the finger print apparatus 26 is incorporated on the remote control device 41 as an "activate remote" key that must be pressed in order for the remote to start functioning. In this embodiment, the fingerprint can be read when the remote control is activated. In yet another preferred embodiment, the remote control device 41 goes to sleep (i.e., forgets the current user identification) if not used for a defined period of time, for example, 30 minutes.

Figure 5 illustrates a simplified block diagram of a typical embodiment recognition technology device 14 of the present invention. For example, recognition technology device 14 includes extraction technology 42, matching technology 44, and a template database 46. Extraction technology 42 takes the data of identifying characteristics of the user acquired by the data acquisition device 12 (from Figure 1) and processes the data into a format suitable for recognition, resulting in the creation of a template. The resulting template is then compared to the templates of data for various users stored in the template database 46. This comparison is made by matching technology 44.

The template database 46 typically contains template data associated with each user in a household. For example, if fingerprint recognition is used, then a template generated from a bitmap image of each user's finger in a household is stored in the template database 46. Once matching technology 44 finds a matching data template to the data acquired by the data acquisition device 12, then the user is identified as the user whose data template matches the acquired data.

One preferred embodiment of a content provider system 20 is illustrated in Figure 6. The system 20 comprises, as an example only, a content selector 50, a customized content database 52, a program listing database 54, a user profile database 56, and a subscriber template database 58.

The content selector 50 selects particular content to be provided to a particular user based on preferences data associated with that user and stored in the user's profile, which can be retrieved from database 56. The preferences data may be in the form of individualized preferences data for each user in the entire system or may be chosen according to generalized classes of preferences based upon classifications such as gender and age.

The program-listing database 54 will provide the user with options for the user to view in the case of television viewing. The program-listing database 54 is customized according to preferences data stored in the preferences database 56. For example, the program listings may be presented in a different order for each individual user depending upon that user's preferences. Favorite programs or programs of favorite genres can be presented first and only followed by other programs.

The customized content database 52 contains customized content programming elements that can be applied to content such as commercials to add information content that is associated with a user's classification such as gender and/or age. For example, a car commercial may be provided to all users. However, different information, such as style, safety, comfort, drive, and the like may be additionally displayed in various combinations to different users depending on their classification by gender and/or age.

Subscriber template database 58 contains recognition fingerprint, speech, video, and other templates for users who have subscribed to the content provider system 20.

In one preferred embodiment method of the present invention, multiple user interfaces may be utilized to support identification of multiple simultaneous users. In another embodiment method of the present invention in which video recognition is used, video scanning may recognize multiple users. Scanning will provide the recognition technology device 14 with the identity of multiple users during a single interactive session and may provide customized content based on some combination of user preferences.

In yet another preferred embodiment method, an unknown user to the recognition technology device 14 may be recognized by the content provider system 20 if that unknown user is a subscriber to the content provider system 20. In this embodiment, the recognition technology device 14 will transfer the identifying template data to the content provider system 20 and the content provider system 20 will perform a search of its own subscriber template database. When a match is found, the content selector 50 can consult the user profile database 56 to retrieve demographic and preferences information, select customized content from the customized content database 52 and send it to the apparatus for content provisioning 16 for presentation to the user.

The method of the present invention may further comprise initializing the recognition technology device 14. The initialization process includes inputting the data of identifying characteristics into the user interface for use by the recognition technology device 14, verifying the user feature data, and inputting information related to the user to be associated with the user feature data.

For example, for fingerprint recognition, the users in a household would be asked to put their finger on the sensor, the sensor will generate an image of the fingerprint, the image would be converted to a template by the extraction technology 42, and the template would be transferred to the template database 46. The user may be asked to verify the fingerprint by again putting their finger on the sensor for an image of the fingerprint. The user can then input information that will identify the user, their associated demographic data, and their preferences when the sensor input matches the user's template in the template database 46.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A system for user recognition and customized content provisioning, the system comprising:
a data acquisition device for acquiring data related to a user without active user input or participation, the device including a sensor located therein; and
an apparatus capable of presenting customized content to the user, the customized content being related to the acquired data related to the user.

2. The system of claim 1 and further comprising a recognition technology device coupled to the data acquisition device, the recognition device receiving the data related to the user and generating identifying information related to the user from the acquired data.

3. The system of claim 2 wherein the recognition technology device comprises extraction and matching technology and a template database.

4. The system of claim 1, claim 2 or claim 3 wherein the system is coupled to a content provider system, the content provider system using the data related to the user to customize the content presented by the apparatus.

5. The system of claim 1, claim 2, claim 3 or claim 4 wherein the data acquisition device is embedded in a remote control device, the remote control device being capable of providing signals to control the apparatus capable of presenting customized content to the user.

6. A method of providing customized content to a user, the method comprising:
collecting user data without active identification measures by the user;
determining characteristics of the user from the collected user data; and
providing customized content to the user based upon the determined characteristics.

7. The method of claim 6 wherein collecting user data comprises:
collecting identifying characteristics data of the user utilizing sensor technology;
extracting the data from the sensor technology;
matching the data to a data template.

8. The method of claim 6 or claim 7 and further comprising:
transferring the characteristics of the user to a content provider; and
receiving the customized content from the content provider.

9. A remote control device comprising:
a housing;
electronic circuitry disposed within the housing;
a signal transmitter disposed within the housing;
a plurality of control keys disposed on an outer surface of the housing, at least some of the control keys operable by hand; and
a fingerprint sensor disposed on an outer surface of the housing.

10. The device of claim 9 wherein the fingerprint sensor is embedded in one of the control keys.
